# EUROPEAN PATENT APPLICATION

(11) **EP 4 446 978 A1**
(43) Date of publication of application: **16.10.2024**
(21) Application number: 23167744.4
(22) Date of filing: 13.04.2023
(51) Int. Cl.: G06T 7/00

(54) **CAMERA-BASED FOREIGN OBJECT DETECTION FOR X-RAY IMAGING**

(71) Applicant: Koninklijke Philips N.V., 5656 AG Eindhoven (NL)
(72) Inventor: SAALBACH, Axel, Eindhoven (NL); SCHADEWALDT, Nicole, Eindhoven (NL); WIEBERNEIT, Nataly, 5656AG Eindhoven (NL); JOCKEL, Sascha Andreas, Eindhoven (NL); SCHULZ, Heinrich, Eindoven (NL); BARKHAUSEN, Jörg, Eindhoven (NL)
(74) Representative: Philips Intellectual Property & Standards

(57) **Abstract**

The present invention relates to a method for camera-based object detection for X-ray imaging. An optical image of a patient to be imaged with an X-ray imaging device is acquired by an optical camera, and a presence of an object attached to the patient is detected by analysing the received optical image. In case an object attached to the body of the patient is determined, an alert regarding the presence of the at least one object is provided to an operator of the X-ray imaging device. Optionally, it may be determined whether the object is detrimental to the quality of the X-ray image due to its type and specific location.

## Description

### FIELD OF THE INVENTION

The present invention relates to a computer-implemented method for camera-based object detection for X-ray imaging, an X-ray imaging system, a data processing apparatus, a computer program, and a computer-readable storage medium.

### BACKGROUND OF THE INVENTION

Foreign objects attached to the patient are a common problem in X-ray imaging. They can reduce the diagnostic quality of an X-ray image and obscure clinically relevant findings and pathology. Substantial quality problems in chest X-ray images may occur, with a large number of the upload images not qualifying for an optimal diagnosis. Possible consequences of acquired images with undetected foreign object may include, amongst others, unnecessary re-takes of the image, erroneous diagnosis, or suboptimal treatment of the patient. While foreign objects inside of the patient, like e.g. pacemakers or lines and tubes are often unavoidable, and commonly the reason for an examination, the situation for external objects is different. Following imaging guidelines, external objects like jewelry or medical equipment, if possible, should be removed from the field of view of the imaging device. However, they remain a common problem due to a lack of training or high workload in the clinical environment, e.g. in intensive care units and emergency departments. In this context, foreign objects have been reported as the largest contributing factor to imaging quality problems. In addition, being a projection-based imaging technique, it can be ambiguous for a radiologist to determine if a foreign object in an X-ray image is inside or outside of the patient.

The inventors of the present invention have thus found that it would be advantageous to have a method that at least partially solves these problems and provides quality assurance in X-ray imaging and prevents image occlusions and obscured pathology.

### SUMMARY OF THE INVENTION

It is an object of the present invention to provide an improved method for avoiding image occlusion by external objects in X-ray imaging.

The object of the present invention is solved by the subject matter of the independent claims, wherein further embodiments are incorporated in the dependent claims.

The described embodiments similarly pertain to the computer-implemented method for camera-based object detection for X-ray imaging, the X-ray imaging system, the data processing apparatus, the computer program, and the computer-readable storage medium. The embodiments described further may be combined in any possible way. Synergistic effects may arise from different combinations of the embodiments although they might not be described in detail.

Further on, it shall be noted that all embodiments of the present invention concerning a method might be carried out with the order of the steps as described, nevertheless this has not to be the only and essential order of the steps of the method. The herein presented methods can be carried out with another order of the disclosed steps without departing from the respective method embodiment, unless explicitly mentioned to the contrary hereinafter.

According to a first aspect of the invention, there is provided a computer-implemented method for camera-based object detection for X-ray imaging. The method comprises the steps of receiving an optical image of a patient to be imaged with an X-ray imaging device acquired by an optical camera, determining a presence of an object attached to a body of the patient by analysing the received optical image, and, in case the presence of at least one object attached to the body of the patient is determined, providing an alert regarding the presence of the at least one object.

Thus, the invention proposes the use of an X-ray imaging system equipped with an optical RGB camera system. Using an artificial intelligence solution, the presence of external foreign objects at a patient can be detected by analysing an RGB image aquired by the camera in the preparation process of the X-ray imaging. An operator of the X-ray imaging system is provided with a warning regarding the presence of the foreign object.

In embodiments of the invention, information regarding the presence of the at least one object can be encoded in, for example, a DICOM image in order to guide the radiologist and provide him with data about the position and/or type of the detected object. Thus, this deep-learning based approach may provide applications include system-side alerts for technicians prior to the acquisition as well as the annotation of external foreign object to support the radiologist.

In addition, many possible error sources may be detected before a patient is exposed to radiation. This technology might also be employed in a computed tomography system prior to the acquisition of the surview in order to prevent many errors that would otherwise be detected later in the workflow.

In an embodiment of the invention, the presence of the object attached to the body of the patient is determined by analysing the received optical image with an artificial intelligence unit.

In an embodiment of the invention, the artificial intelligence unit comprises a convolutional neural network, and/or is configured to utilize a computer vision method and/or deep learning. A wide variety of methods may be used to detect the foreign object in the acquired image, ranging from, for example, classical computer vision methods to state of the art deep learning methods. From the technology perspective, there are different levels of granularity considerable: Using image classification techniques, it can be verified whether an image contains a foreign object, which may also work for multiple object classes. Using object detection techniques, individual objects in an image can be localized and their object class can be determined. Finally, using instance segmentation techniques, a pixel level delineation of the objects can be determined.

In an embodiment of the invention, the optical image is acquired by the optical camera when the patient is in a position for X-ray imaging and/or is positioned for X-ray imaging. Optionally, a plurality of images like a video stream can envisaged for analyzation, showing the preparation of the patient to be imaged.

In an embodiment of the invention, a field of view of the optical camera at least partially comprises a field of the X-ray imaging device. Thus, the field of view of the X-ray device might be rather limited compared to the field of view of the RGB image of the camera, in particular if considering also data acquired during the preparation of the patient for imaging. In such a case, it might be able to detect foreign objects at the patient that are outside intended field of view of the X-ray imaging device. Thus, according to the proposed method, an alert can only be provided in case an object in the field of view of the X-ray device is detected.

In an embodiment of the invention, the alert regarding the presence of the at least one object is provided to an operator of the X-ray imaging device.

In an embodiment of the invention, the object is a non-medical object and/or medical equipment. The non-medical object can be, for example, jewelry, a necklace, a ring, glasses, and/or a watch. Not all objects attached to the patient and in field of view of the X-ray device are equally severe with regard to the quality of the X-ray image. For example, certain clothing might be acceptable due to its low specific radiation absorption and scattering properties, and is even not uncommon in many countries during imaging. However, objects attached to the body and depicted in the X-ray image that are made of metal or other materials with comparable high radiation absorption and/or scattering properties are usually not acceptable in the field of view of the X-ray image, as this would lead to a deterioration of the acquired image. Thus, the method may comprise the step of categorizing the detected object, and determining whether the determined presence of the detected object is detrimental for the quality of the acquired X-ray image. Thus, an alert may only be provided in case the object would deteriorate the quality of the X-ray image.

In an embodiment of the invention, the method comprises the step of determining a type of the at least one object.

In an embodiment of the invention, the method comprises the step of determining a location of the at least one object.

In an embodiment of the invention, the method comprises the step of providing the determined type and/or the determined location.

In an embodiment of the invention, the method comprises the steps of receiving an X-ray image of the patient acquired by the X-ray imaging device, in case the presence of at least one object attached to the body of the patient is determined, annotating the received X-ray image with data indicative of the determined type and/or the determined location of the at least one object, and providing the annotated X-ray image. Thus, the information regarding the detected object can be encoded in a DICOM image acquired by the X-ray image system to guide the radiologist.

According to another aspect of the invention, there is provided a data processing apparatus comprising means for carrying out the steps of the method according to any of the preceding embodiments.

According to another aspect of the invention, there is provided an X-ray imaging system comprising an optical camera and the data processing apparatus according to any of the preceding embodiments.

According to another aspect of the invention, there is provided a computer program comprising instructions which, when the program is executed by a computer, cause the computer to carry out the steps of the method according to any of the preceding embodiments.

According to another aspect of the invention, there is provided a computer-readable storage medium comprising instructions which, when executed by a computer, cause the computer to carry out the steps of the method according to any of the preceding embodiments. Thus, the benefits provided by any of the above aspects equally apply to all of the other aspects and vice versa.

In summary, the invention relates to a method for camera-based object detection for X-ray imaging. An optical image of a patient to be imaged with an X-ray imaging device is acquired by an optical camera, and a presence of an object attached to the patient is detected by analysing the received optical image. In case an object attached to the body of the patient is determined, an alert regarding the presence of the at least one object is provided to an operator of the X-ray imaging device. Optionally, it may be determined whether the object is detrimental to the quality of the X-ray image due to its type and specific location.

One of the advantages of embodiments of the present invention for camera-based object detection of camera-facing external objects for X-ray imaging is that it can easily be employed as part of any X-ray system with a camera. Another advantage is that a technician or operator can receive an alert about the presence of a foreign object that better should get removed before X-ray imaging. Another advantage may be that the obtained information regarding the detected foreign object can be encoded into a DICOM image and can be displayed as part of a PACS viewer or a diagnostic workstation. X-ray system may be equipped with an optical camera system which helps the technician to position the patient, and to monitor the patient while being at the system console. Advantageously thus camera system can be employed for the method according to the invention. These advantages are non-limiting and other advantages may be envisioned within the context of the present application.

The above aspects and embodiments will become apparent from and be elucidated with reference to the exemplary embodiments described hereinafter. Exemplary embodiments of the invention will be described in the following with reference to the following drawings:

### BRIEF DESCRIPTION OF THE DRAWINGS

Fig. 1 shows a block diagram of a computer-implemented method for camera-based object detection for X-ray imaging according to an embodiment of the invention.
Fig. 2 shows a block diagram of a computer-implemented method for camera-based object detection for X-ray imaging according to another embodiment of the invention.
Fig. 3 shows a schematic illustration of the computer-implemented method for camera-based object detection for X-ray imaging according to an embodiment of the invention.
Fig. 4 shows a schematic setup of an X-ray imaging device according to an embodiment of the invention.

### DETAILED DESCRIPTION OF EMBODIMENTS

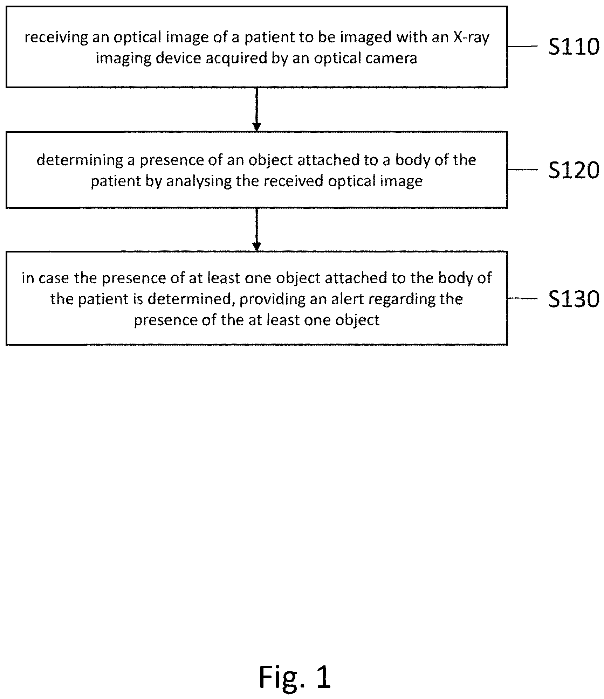

Fig. 1 shows a block diagram of a computer-implemented method for camera-based object detection for X-ray imaging according to an embodiment of the invention. The method comprises the step S110 of receiving an optical image 120 of a patient to be imaged with an X-ray imaging device 200 acquired by an optical camera 130, the step S120 of determining a presence of an object 140 attached to a body of the patient 110 by analysing the received optical image 120, and, in case the presence of at least one object 140 attached to the body of the patient 110 is determined, the step S130 of providing an alert 150 regarding the presence of the at least one object.

Therefore, an X-ray imaging system 200 equipped with an optical RGB camera 130 can be used to aquire an optical image of the patient. Using an artificial intelligence 160 solution, the presence of external foreign objects 140 at the patient 110 can be detected by analysing the RGB image aquired by the optical camera 130 in the preparation process of the X-ray imaging. An operator of the X-ray imaging system 200 can be provided with an alert 150 regarding the presence of the foreign object 140 at the patient 110.

Preferably, the presence of the object 140 attached to the body of the patient 110 is determined by analysing the received optical image 120 with an artificial intelligence unit 160. The artificial intelligence unit 160 may comprise a convolutional neural network, and/or may be configured to utilize a computer vision method and/or deep learning. A wide variety of methods may be used to detect the foreign object in the acquired image, ranging from, for example, classical computer vision methods to state of the art deep learning methods. From the technology perspective, there are different levels of granularity considerable: Using image classification techniques, it can be verified whether an image contains a foreign object, which may also work for multiple object classes. Using object detection techniques, individual objects in an image can be localized and their object class can be determined. Finally, using instance segmentation techniques, a pixel level delineation of the objects can be determined.

In the following, different potential embodiments are described. To implement a warning mechanism for technicians, deep learning techniques from the computer vision domain can be employed. In a basic implementation, foreign object detection can be considered as an image classification problem. In recent years particularly convolutional neural network (CNN) architectures like DenseNet, ResNet or EfficientNet evolved as state-of-the-art method for image classification. Given a comprehensive set of training images covering camera images of patients, with and without foreign objects attached to the patient, a CNN can be trained to identify images with foreign objects (binary classification), or to predict even object categories (multi-label classification). Using a camera integrated in an X-Ray system, training data, and corresponding X-ray images, can be easily acquired as part of the clinical routine.

Thus, the optical image can be acquired by an optical camera 130 when the patient 110 is in a position for X-ray imaging and/or is positioned for X-ray imaging. Optionally, a plurality of images like a video stream can envisaged for analyzation, showing the preparation of the patient to be imaged. A field of view of the optical camera 130 can at least partially comprise a field of the X-ray imaging device 200.

In case of visible external objects, an alarm on the system console can be generated and the locations and object types can be indicated. The alert regarding the presence of the at least one object 140 can be provided to an operator of the X-ray imaging device 200. The object can be, for example, a non-medical object and/or medical equipment. The non-medical object can be, for example, jewelry, a necklace, a ring, glasses, and/or a watch.

Given a more detailed annotation, for example in terms of ROIs, or pixel level annotations, more advanced approaches for instance detection like Faster RCNN, or semantic segmentation like Mask RCNN can be employed. Using these techniques even the location of a foreign object can be determined, up to a precise localization or even a segmentation. Thus, the type and/or the location of the foreign object 140 can be determined and provided.

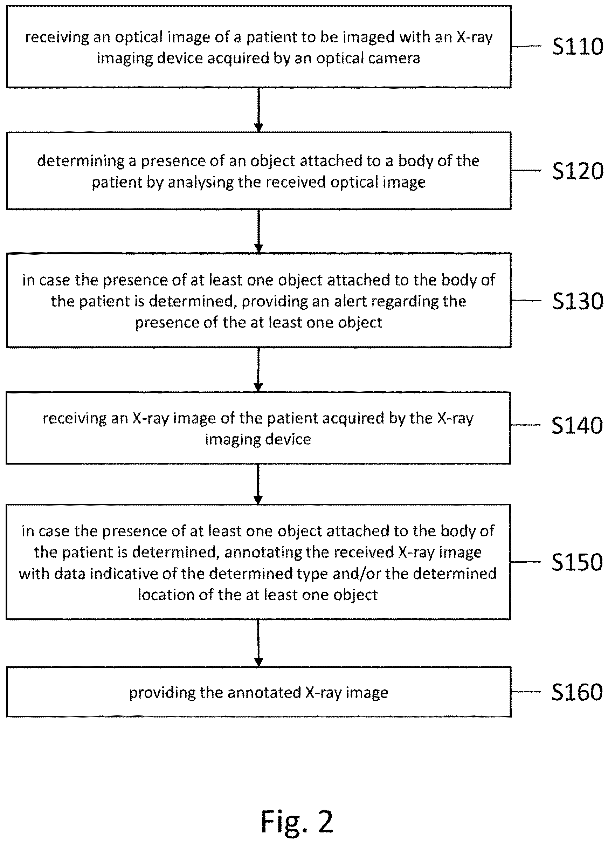

Fig. 2 shows a block diagram of a computer-implemented method for camera-based object detection for X-ray imaging according to another embodiment of the invention. The method shown in this embodiment comprises additionally to the method shown in Fig. 1 the step S140 of receiving an X-ray image of the patient 110 acquired by the X-ray imaging device 200, in case the presence of at least one object 140 attached to the body of the patient 110 is determined, the step S150 of annotating the received X-ray image with data indicative of the determined type and/or the determined location of the at least one object 140, and the step S160 of providing the annotated X-ray image.

In this embodiment, information from the camera image 120 can be used to enhance the X-Ray image for the reading process. Objects 140 that have been detected in the camera image 120, and which have not been removed during the acquisition, such as, for example, an ICU monitoring device, can be indicated in a DICOM overlay. Information regarding the presence of the at least one object can be encoded, for example, in a DICOM image in order to guide the radiologist and provide him with data about the position and/or type of the detected object. While the object and its type might be easily detectible in the camera image, the information is lost in the X-ray image

Thus, the X-ray image can be provided with an overlay indicating the position of a detected foreign object, and data can be provided regarding the type of the detected object 140. While for the detection of an foreign object a normal RGB camera image is sufficient, an accurate pixel overlay may require additional sensor information, for example in terms of a RGBD camera or a stereo camera.

Thus, this deep-learning based approach may provide applications include system-side alerts for technicians prior to the acquisition as well as the annotation of external foreign objects to support the radiologist.

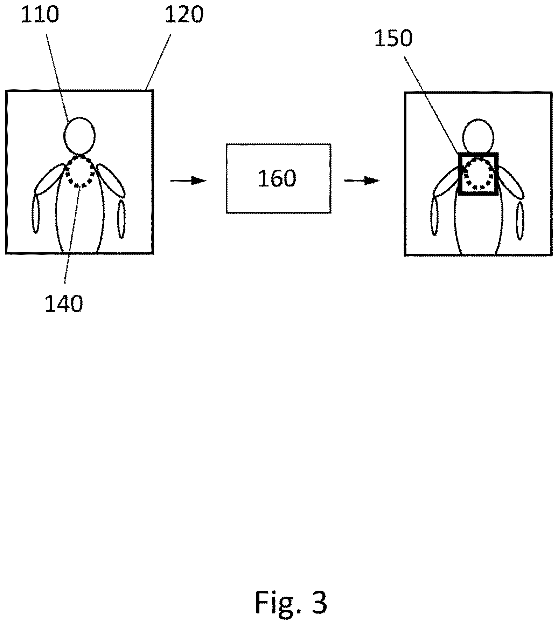

Fig. 3 shows a schematic illustration of the computer-implemented method for camera-based object detection for X-ray imaging according to an embodiment of the invention. An optical image 120 of a patient 110 is received, with a foreign object 140 being attached to the patient 110. The optical image 120 is analyzed by a processing unit 170 comprising an artificial intelligence unit 160. If an object 140 attached to the patient 110 is detected, an alert 150 is provided. In this case, the alert can be provided on a user interface of the X-ray imaging device 200, showing the optical image with an overlay indicating the position of the detected object 140.

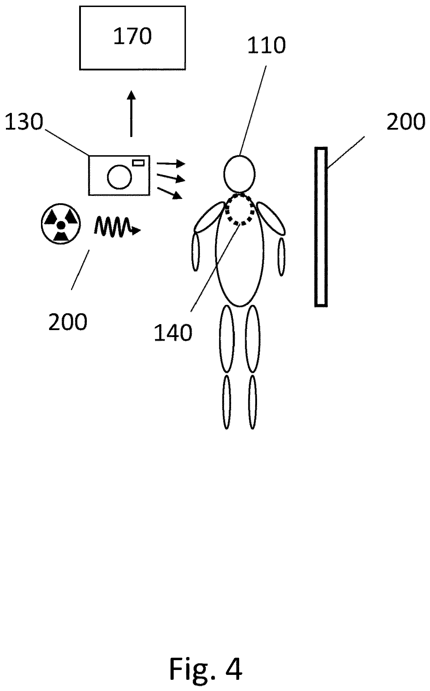

Fig. 4 shows a schematic setup of an X-ray imaging device 200 according to an embodiment of the invention. The X-ray imaging device 200 comprises an X-ray source emitting X-ray radiation. A patient 110 is irradiated with the radiation, and an X-ray detector detects the part of the radiation transmitted through the patient 110. An object 140 attached to the patient 110 may occlude anatomical structures or a region of interest of the patient 110, for example. Thus, an optical camera 130 acquiring an optical image 120 of the patient can be provided. Preferably, the X-ray imaging device 200 is equipped with the optical camera 130. The acquired optical image 120 is transmitted to a processing unit 170, the processing unit 170 being configured to analyze the optical image 120 with respect to a presence of an object 140 being attached to the patient 110. In case an object is detected, an alert is provided to an operator of the X-ray imaging device 200.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. The mere fact that certain measures are re-cited in mutually different dependent claims does not indicate that a combination of these measures cannot be used to advantage. Any reference signs in the claims should not be construed as limiting the scope.

### LIST OF REFERENCE SIGNS:

- 110: patient
- 120: optical image
- 130: optical camera
- 140: object
- 150: alert
- 160: artificial intelligence unit
- 170: data processing apparatus
- 200: X-ray imaging device

## Claims

1. A computer-implemented method for camera-based object detection for X-ray imaging, the method comprising the steps of:
receiving (S110) an optical image (120) of a patient (110) to be imaged with an X-ray imaging device (200) acquired by an optical camera (130);
determining (S120) a presence of an object (140) attached to a body of the patient (110) by analysing the received optical image (120); and
in case the presence of at least one object (140) attached to the body of the patient (110) is determined, providing (S130) an alert (150) regarding the presence of the at least one object (140).

2. The method according to claim 1, wherein the presence of the object (140) attached to the body of the patient (110) is determined by analysing the received optical image (120) with an artificial intelligence unit (160).

3. The method according to claim 2, wherein the artificial intelligence unit (160) comprises a convolutional neural network, and/or is configured to utilize a computer vision method and/or deep learning.

4. The method according to any of the preceding claims, wherein the optical image (120) is acquired by the optical camera (130) when the patient (110) is in a position for X-ray imaging and/or is positioned for X-ray imaging.

5. The method according to any of the preceding claims, wherein a field of view of the optical camera (130) at least partially comprises a field of the X-ray imaging device (200).

6. The method according to any of the preceding claims, wherein the alert (150) regarding the presence of the at least one object (140) is provided to an operator of the X-ray imaging device (200).

7. The method according to any of the preceding claims, wherein the object (140) is a non-medical object and/or medical equipment.

8. The method according to any of the preceding claims, wherein the method comprises the step of determining a type of the at least one object (140).

9. The method according to any of the preceding claims, wherein the method comprises the step of determining a location of the at least one object (140).

10. The method according to any of claims 8 or 9, wherein the method comprises the step of providing the determined type and/or the determined location.

11. The method according to any of claims 8 or 9, wherein the method comprises the steps of:
receiving (S140) an X-ray image (120) of the patient (110) acquired by the X-ray imaging device (200);
in case the presence of at least one object (140) attached to the body of the patient (110) is determined, annotating (S150) the received X-ray image (120) with data indicative of the determined type and/or the determined location of the at least one object (140); and
providing (S160) the annotated X-ray image.

12. A data processing apparatus (170) comprising means for carrying out the steps of the method according to any of claims 1 to 11.

13. An X-ray imaging device (200) comprising an optical camera (130) and the data processing apparatus (170) according to claim 12.

14. A computer program comprising instructions which, when the program is executed by a computer, cause the computer to carry out the steps of the method according to any of claims 1 to 11.

15. A computer-readable storage medium comprising instructions which, when executed by a computer, cause the computer to carry out the steps of the method according to any of claims 1 to 11.
